Europäisches Patentamt

European Patent Office

Office européen des brevets

(19)

(11) **EP 0 630 498 B1**

(12) **FASCICULE DE BREVET EUROPEEN**

(45) Date de publication et mention
de la délivrance du brevet:
**24.07.1996 Bulletin 1996/30**

(21) Numéro de dépôt: **93905448.2**

(22) Date de dépôt: **02.03.1993**

(51) Int Cl.$^6$: **G06F 12/12**

(86) Numéro de dépôt international:
**PCT/FR93/00212**

(87) Numéro de publication internationale:
**WO 93/18458 (16.09.1993 Gazette 1993/22)**

(54) **DISPOSITIF D'ANTEMEMOIRE**

CACHE-SPEICHEREINRICHTUNG

CACHE MEMORY DEVICE

(84) Etats contractants désignés:
**DE GB NL**

(30) Priorité: **13.03.1992 FR 9203054**

(43) Date de publication de la demande:
**28.12.1994 Bulletin 1994/52**

(73) Titulaire: **INRIA INSTITUT NATIONAL DE RECHERCHE
EN INFORMATIQUE ET EN AUTOMATIQUE
Rocquencourt F-78153 Le Chesnay (FR)**

(72) Inventeur: **SEZNEC, André
F-35690 Acigné (FR)**

(74) Mandataire: **Plaçais, Jean-Yves et al
Cabinet Netter,
40, rue Vignon
75009 Paris (FR)**

(56) Documents cités:
**EP-A- 0 080 062          EP-A- 0 334 479**

- **PROCEEDINGS OF THE IEEE 1990 CUSTOM INTEGRATED CIRCUITS CONFERENCE, 13 - 16 Mai 1990, Boston, US, pages 2421 - 2424, IEEE, New York, US; E.REESE et al.: 'A sub-10ns cache SRAM, for high performance 32 bit microprocessors'**
- **IEEE TRANSACTIONS ON COMPUTERS vol. 38, no. 12, Décembre 1989, NEW YORK US pages 1612 - 1630 M. D. HILL ET AL. 'Evaluating associativity in CPU caches'**
- **COMPUTING SURVEYS, vol. 14, No 3, Septembre 1982, pages 473-530, A.J. SMITH, "Cache Memories"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

# EP 0 630 498 B1

## Description

L'invention se rapporte au domaine technique de l'antémémoire, ou mémoire-cache.

Elle trouve une application générale dans les systèmes informatiques.

Le progrès technologique, notamment dans le domaine de la vitesse des horloges et de l'intégration des processeurs, tend à réduire de plus en plus les temps de cycle desdits processeurs et à permettre le séquencement et l'exécution de plusieurs instructions par cycle.

Il en résulte que la demande en débit d'informations sur la mémoire principale d'un système informatique devient de plus en plus grande.

Cependant, le progrès technologique n'a pas permis de diminuer le temps d'accès aux informations en mémoire principale à la même vitesse que le temps de cycle des processeurs.

En effet, actuellement, le temps d'accès en mémoire principale est souvent de l'ordre de plusieurs dizaines de cycles processeurs, voire des centaines de cycles processeurs.

Une solution connue pour masquer la latence de l'accès aux informations en mémoire principale consiste à utiliser des antémémoires (Computing Surveys, Vol. 14, No 3, September 1982, pages 473-530, "Cache Memories").

D'une manière générale, une antémémoire est une mémoire d'accès rapide et de taille généralement réduite dans laquelle est stockée une partie de l'ensemble des informations stockées dans la mémoire principale.

En pratique, quand un processeur effectue une requête comprenant une adresse principale en mémoire principale, et éventuellement des données, l'antémémoire répond à ladite requête soit en reliant l'adresse principale que contient cette requête et une ligne de données de l'antémémoire quand la donnée désirée est présente et valide dans l'antémémoire, soit en signalant son absence dans le cas contraire. Dans ce dernier cas, le processeur adresse la mémoire principale pour accéder à la donnée désirée. La ligne de données en mémoire principale contenant la donnée désirée peut ensuite être chargée dans l'antémémoire.

On connaît plusieurs organisations d'antémémoire, notamment l'organisation de mise en carte directe appelée encore "direct mapped", l'organisation multi-bancs totalement associative et l'organisation multi-bancs associative par ensemble. Ces organisations seront décrites plus en détail ci-après.

EP-A-0 334 479 décrit un dispositif d'antémémoire pseudo-associatif de type multi-bancs, dans lequel une pluralité de circuits de sélection différents (A, B, C, D) sont utilisés pour associer chacun leur banc d'antémémoire associé à un domaine d'adressage différent de la mémoire centrale; L'article sur les antémémoires, paru dans Computing Surveys, vol. 14, No 3, Septembre 1982, pages 473-530, "Cache Memories", mentionne en particulier l'importance du choix de la fonction (mapping function) reliant une adresse en mémoire principale à une position dans l'antémémoire, et suggère qu'un algorithme pseudo-aléatoire opérant des OU exclusifs entre des bits au sein de groupes de bits de l'adresse principale augmente le taux de succès.

Il est clair que l'utilisation des antémémoires accélère le temps d'accès aux données en mémoire principale grâce au fait notamment que les antémémoires sont plus rapides que les mémoires principales.

Néanmoins, les performances effectives des systèmes informatiques utilisant des antémémoires dépendent du taux moyen de succès lors de l'accès aux données dans lesdites antémémoires.

Or, ce taux moyen de succès n'est pas totalement satisfaisant dans les organisations des antémémoires mentionnées ci-avant.

L'invention a justement pour but d'améliorer le taux moyen de succès lors de l'accès aux données dans les antémémoires.

L'invention porte sur un dispositif d'antémémoire utilisant une organisation multi-bancs.

De façon connue (voir EP-A-0 334 479), le dispositif d'antémémoire comprend :

- au moins une entrée/sortie-requête pour recevoir une requête d'accès à une donnée stockée en mémoire principale adressable ou en une autre antémémoire adressable, comprenant une adresse principale, et éventuellement des données ;

- au moins une entrée/sortie-mémoire principale reliée à la mémoire principale adressable pour accéder à ladite donnée désirée de la mémoire principale ;

- une pluralité de bancs de mémoire ayant chacun un nombre de lignes aptes à contenir des données, ces lignes étant individuellement désignables par une adresse locale, dans chaque banc ;

- des moyens de calcul reliés à l'entrée/sortie-requête et propres à répondre à la requête en reliant l'adresse principale que contient cette requête à une adresse locale interne à chacun des bancs, la ligne ainsi désignée dans le banc étant la seule ligne dudit banc susceptible de contenir la donnée référencée par l'adresse principale ;

2

- des moyens de chargement reliés à l'entrée/sortie-mémoire principale pour charger dans l'antémémoire la ligne de données de la mémoire principale contenant la donnée désirée lorsque celle-ci n'est pas présente dans l'antémémoire.

Selon la définition générale de l'invention donnée dans la revendication 1, les moyens de calcul établissent ladite relation entre l'adresse principale et l'adresse locale dans le banc selon une loi prédéterminée associée dudit banc ; au moins deux des lois prédéterminées sont distinctes suivant les bancs considérés ; et les deux bancs considérés sont adressés séparément, selon leur loi respective.

D'autres caractéristiques et avantages de l'invention apparaîtront à la lumière de la description détaillée ci-après et des dessins dans lesquels :

- la figure 1 est une vue schématique d'un système informatique connu ;

- la figure 2 est une vue schématique d'une antémémoire agencée selon une organisation connue appelée "totalement associative" ;

- la figure 3 est une vue schématique d'une antémémoire agencée selon une organisation connue appelée "direct mapped" ;

- la figure 4 est une vue schématique d'une antémémoire multi-bancs agencée selon une organisation connue appelée "associative par ensemble" ;

- la figure 5 est une vue schématique d'une antémémoire multi-bancs agencée selon une organisation associative par ensemble modifiée selon l'invention ; et

- la figure 6 est une vue schématique d'une loi permettant de relier l'adresse principale que contient une requête à une adresse locale dans un banc selon l'invention.

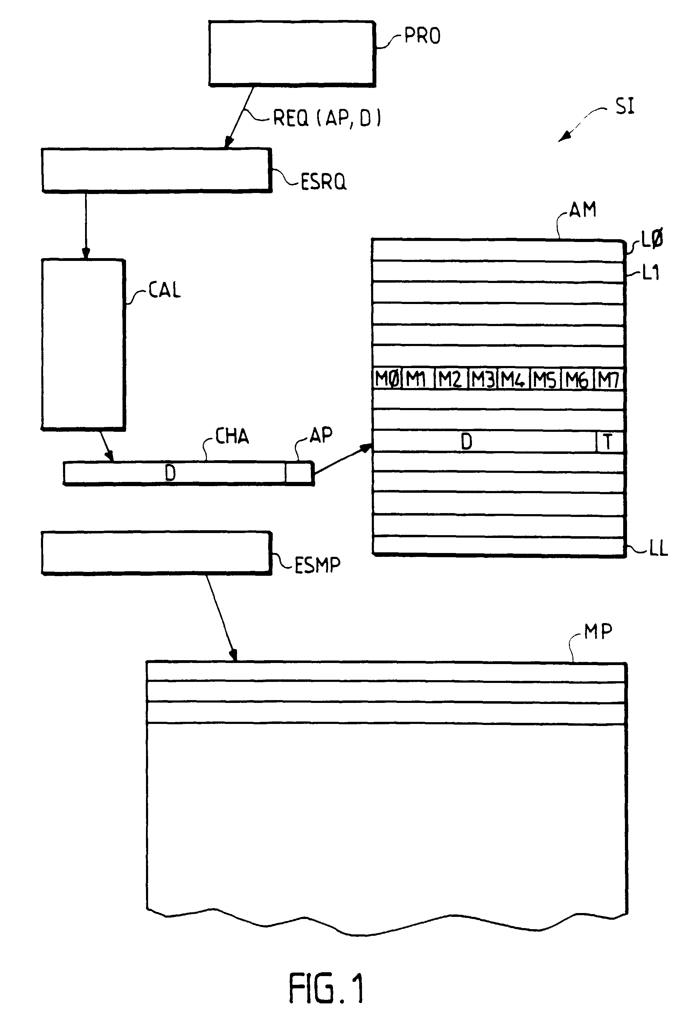

Sur la figure 1, la référence SI désigne un système informatique utilisant une antémémoire AM.

L'antémémoire AM comprend L lignes individualisées en L0 à LL contenant chacune M mots de B bits. Par exemple, l'antémémoire AM comprend 64 lignes de 8 mots de 16 bits. Le produit L x B x M définit la taille en bits de l'antémémoire.

Des données D ainsi qu'éventuellement des indicateurs T (tag) sont stockés dans les lignes de l'antémémoire.

Les indicateurs T servent par exemple à déterminer l'adresse principale AP en mémoire principale des données stockées dans la ligne de l'antémémoire, et à indiquer la validité desdites données. Il est à remarquer que c'est l'adresse principale qui est stockée dans l'indicateur et qui permet de faire la liaison entre la donnée dans l'antémémoire et son adresse en mémoire principale.

Lorsqu'un processeur PRO souhaite accéder à une donnée stockée en mémoire principale MP, il effectue tout d'abord une requête REQ comprenant l'adresse principale AP desdites données désirées en mémoire principale MP, et éventuellement des données.

La requête REQ est alors reçue par des moyens formant entrée/sortie ESRQ reliés à des moyens CAL propres à répondre à la requête en reliant par des lois prédéterminées pour l'antémémoire, l'adresse principale AP que contient cette requête et des adresses locales AL de l'antémémoire AM.

Des moyens de chargement CHA chargent l'antémémoire en fonction des requêtes reçue.

Lorsque la donnée désirée est présente dans la ligne de données L de l'antémémoire référencée par l'adresse locale AL, le processeur accède à ladite donnée désirée.

Dans le cas contraire, le processeur adresse la mémoire principale via les moyens formant entrée/sortie ESMP pour accéder à la donnée désirée en mémoire principale.

La ligne de donnée en mémoire principale contenant la donnée désirée peut alors être chargée dans l'antémémoire en fonction des lois prédéterminées.

De façon connue, l'organisation de l'antémémoire diffère selon son degré d'associativité.

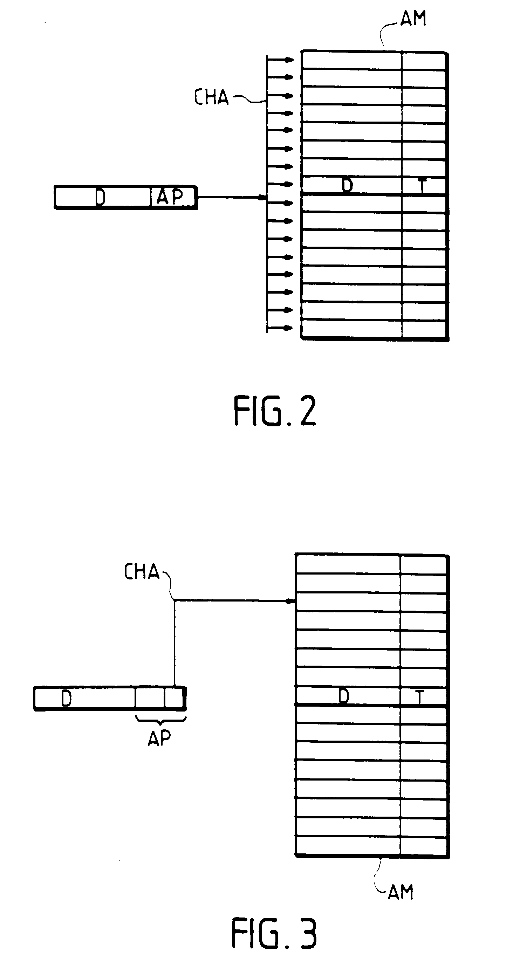

Sur la figure 2, on a représenté une antémémoire agencée selon une organisation dite totalement associative.

Dans une telle organisation, les moyens de chargement CHA chargent les lignes de données de la mémoire principale dans n'importe quelle ligne de l'antémémoire et cela quelle que soit l'adresse principale de la ligne de données en mémoire principale.

Une telle organisation nécessite des mécanismes d'accès à l'antémémoire de taille très importante et un temps d'accès prohibitif quand le nombre de lignes de l'antémémoire est grand car il est nécessaire de lire l'indicateur de présence de données T de toutes les lignes de l'antémémoire et de comparer l'adresse principale AP avec l'adresse locale AL de la ligne de données de l'antémémoire, cette adresse principale ainsi que l'information de validité de la ligne étant stockées dans un indicateur associé à la ligne de données.

Sur la figure 3, on a représenté une antémémoire agencée selon l'organisation appelée direct mapped.

Dans une telle organisation, les moyens de chargement CHA chargent ou "mappent" les lignes de données en mémoire principale dans des lignes de l'antémémoire dont l'adresse locale AL respective est directement déduite de l'adresse principale AP, le plus souvent en prenant les bits significatifs de plus faible poids.

L'organisation dite "direct mapped" est relativement simple. En effet, à partir d'une ligne de données en antémémoire, un seul mot et son indicateur de présence T associé sont tout d'abord lus. Ensuite, l'adresse locale AL de l'indicateur de ligne ainsi lue est comparée à l'adresse principale AP à charger. En cas de comparaison affirmative, la ligne de données en mémoire principale est chargée dans la ligne de l'antémémoire ainsi référencée.

Mais, lors du déroulement d'un programme, plusieurs lignes de données en mémoire principale peuvent vouloir être mappées à la même ligne de l'antémémoire et entrer par conséquent en conflit, ce qui génère des échecs lors des accès à l'antémémoire.

Il en résulte qu'une telle organisation a l'inconvénient de présenter un plus mauvais taux de succès lors de l'accès aux données dans l'antémémoire que la précédente organisation.

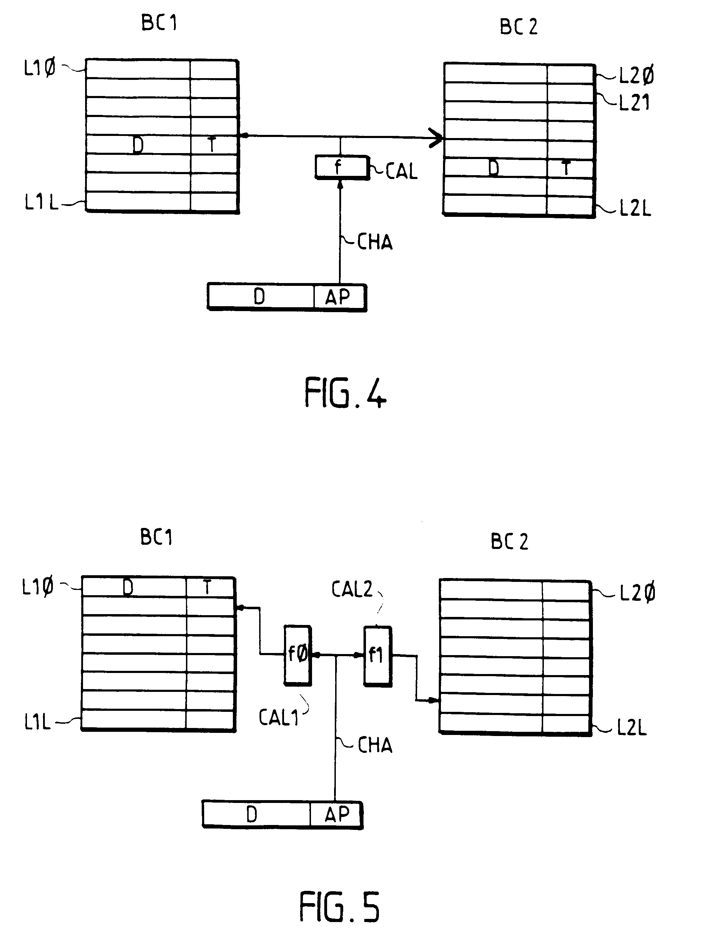

Sur la figure 4, on a représenté une représentation possible d'une antémémoire agencée selon l'organisation multibancs appelée associative par ensemble.

Dans une telle organisation, l'antémémoire AM est subdivisée en X bancs BCi avec i inférieur à X et supérieur à 0 ayant chacun un nombre Li de lignes aptes à contenir des données D.

Ici, le nombre de lignes Li est le même dans tous les bancs. En variante, il pourrait être distinct selon les bancs considérés.

Les bancs BCi sont d'accès ultra rapide. Ils sont réalisés par exemple en technologie RAM statique avec un temps d'accès de l'ordre de 6 à 12 $10^{-9}$ secondes.

Ces lignes LI sont individuellement désignables par une adresse locale AL.

Par exemple, l'antémémoire est subdivisée en deux bancs individualisés en BC1 et BC2 ayant chacun 8 lignes individualisées en L10 à L17 pour BC1 et L20 à L27 pour BC2.

En pratique, les moyens CAL répondent à une requête REQ contenant une adresse principale et éventuellement des données en reliant, par une loi prédéterminée f, l'adresse principale AP que contient cette requête et une même adresse locale AL dans chacun des bancs BCi, la ligne ainsi désignée dans le banc BCi étant la seule ligne dudit banc BCi susceptible de contenir la donnée référencée par l'adresse principale AP.

En d'autres termes, une ligne de données en mémoire principale peut être mise en carte dans n'importe laquelle des lignes de l'ensemble constitué par les lignes d'adresse locale AL dans les bancs BCi. L'adresse locale AL est déterminée par l'adresse principale AP, le plus souvent, l'adresse locale est directement déduite des bits de plus faible poids de l'adresse principale AP.

Toutefois une telle organisation n'est pas totalement satisfaisante dans la mesure où l'adressage des bancs s'effectue conjointement selon la même loi prédéterminée f. En d'autres termes, les lignes de données en mémoire principale sont chargées dans l'un ou l'autre des bancs et cela à la même adresse locale dans chaque banc.

Il en résulte qu'avec une telle organisation, c'est-à-dire un adressage conjoint des bancs, le taux de succès moyen lors de l'accès aux données dans l'antémémoire peut parfois être relativement faible.

Par exemple, lorsque (X+1) lignes de données en mémoire principale relatives à la même application doivent être mises en carte dans l'ensemble constitué des lignes de même adresse locale AL, les (X+1) lignes de données ne peuvent être présentes ensemble dans l'antémémoire, ce qui introduit des conflits.

Le Demandeur s'est posé le problème d'apporter une solution à ce problème.

La solution apportée à ce problème conformément à l'invention consiste à introduire dans une organisation multibancs de l'antémémoire l'utilisation de fonctions d'adressage local distinctes pour les bancs de mémoire et par conséquent un adressage séparé des bancs.

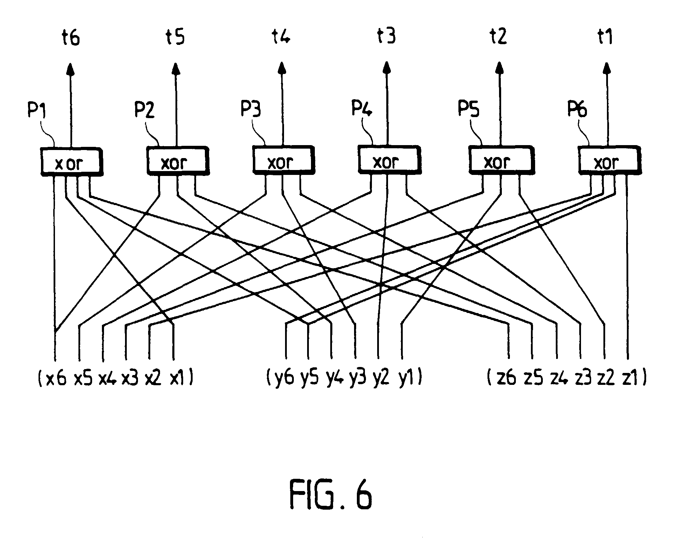

On fait maintenant référence à la figure 5 qui représente schématiquement une antémémoire agencée selon une organisation associative brouillée selon l'invention.

On retrouve l'antémémoire AM subdivisée en deux bancs BC1 et BC2 ayant respectivement L1 et L2 lignes, les lignes contiennent des données D et sont individuellement désignables par une adresse locale AL.

Pour le banc BC1, le moyen de calcul CAL1 répond à une requête en reliant par une loi prédéterminée F1, l'adresse principale AP que contient la requête à une adresse locale AL1 dans le banc BC1, la ligne ainsi désignée dans le banc BC1 étant la seule ligne dudit banc BC1 susceptible de contenir la donnée référencée par l'adresse principale AP.

De même, pour le banc BC2, le moyen de calcul CAL2 répond à une requête en reliant par une loi prédéterminée F2, l'adresse principale AP que contient cette requête à une adresse locale AL2 dans le banc BC2, la ligne ainsi désignée dans le banc BC2 étant la seule ligne dudit banc BC2 susceptible de contenir la donnée référencée par l'adresse principale AP.

De façon surprenante, le Demandeur a constaté qu'en remplaçant l'adressage conjoint des bancs décrit en référence à la figure 4 par un adressage séparé et en rendant distinctes les deux lois suivant les deux bancs considérés, le taux de succès lors de l'accès aux données dans l'antémémoire est amélioré.

En effet, avec un adressage séparé des bancs, les lignes de données en mémoire principale sont maintenant chargées dans l'un ou l'autre des bancs et cela à des adresses locales pouvant être différentes d'un banc à l'autre.

Ainsi, lorsque (x+1) lignes de données en mémoire principale rentrent en conflit pour être mise en carte sur une même ligne de l'antémémoire sur le banc BC1, il est possible qu'elles ne rentrent pas en conflit sur les autres bancs BCj de l'antémémoire et peuvent ainsi être présentes en même temps dans l'antémémoire, ce qui permet d'éviter certains échecs lors de l'accès à l'antémémoire.

Pour permettre un adressage séparé des bancs, il convient de rendre distinctes les lois qui relient l'adresse principale que contient une requête et une adresse locale dans un banc considéré.

Afin d'obtenir un meilleur taux de succès lors de l'accès à l'antémémoire, il convient de choisir soigneusement les lois fi.

Le Demandeur a constaté tout d'abord que les lois fi doivent être équitables.

Une loi fi reliant l'adresse principale d'une ligne de données à l'adresse locale dans le banc BCi est dite équitable, si pour chaque ligne du banc BCi, le nombre de lignes de données D pouvant être mises en carte dans ladite ligne est unique et égal à celui de toutes les lignes du banc BCi.

Ensuite, le Demandeur a constaté que les lois fi doivent être dispersives les unes par rapport aux autres.

Une loi Fi est dite loi de dispersion par rapport à la loi Fj, si la loi Fj, restreinte à l'ensemble des lignes pouvant être mises en carte dans une ligne prédéterminée du banc BCi, est équitable.

Enfin, le Demandeur a constaté que les lois fi ne doivent pas présenter une localité spatiale.

En effet, de nombreuses applications présentent une localité spatiale, c'est-à-dire que dans ces applications les données utilisées dans un laps de temps court ont des adresses principales relativement proches les unes des autres.

Or, afin d'éviter de générer des conflits, il est souhaitable de choisir des lois fi qui permettent d'éviter que deux lignes dont les adresses principales seraient proches l'une de l'autre (c'est-à-dire presque consécutives) soient mises en carte dans une même ligne du banc BCi.

Nous allons maintenant décrire un exemple de famille de lois fi appliqué à une antémémoire constituée de quatre bancs de $2^n$ lignes de $2^c$ octets chacun. Nous supposons que la mémoire principale est de $2^q$ octets où $q \geq 2xn+c$.

Considérons la représentation binaire d'une adresse principale AP en quatre chaînes ou bits AP = (A3,A2,A1,A0) où A0 est une chaîne de c bits, représentant le déplacement dans la ligne, où A1 et A2 sont deux chaînes de n bits et où A3 est la chaîne des q - (2xn+c) bits les plus significatifs.

Soit $(y_n, y_{-n-1}, ..., y_1)$, la représentation binaire de $Y = \Sigma i=1,n\ y_i\ 2^{i-1}$, considérons la fonction H définie par la formule I en annexe, et les quatre lois fi définies par les formules II à V en annexe.

L'homme de l'art comprendra que les lois f1 à f4 sont équitables.

Par ailleurs, pour toute paire (i, j) dans {1,2,3,4}, la loi fi est équitable par rapport à fj pour les valeurs n = 3,4,6,7,9,10,12,13,15 et 16.

Enfin la dispersion locale des données dans un seul banc est quasi-optimale : quelque soit la ligne de l'antémémoire considérée, dans un ensemble $Kx2^n$ lignes de données d'adresses consécutives, il y a au plus K+1 lignes pouvant être mises en carte dans ladite ligne.

Il est à remarquer que l'implémentation des lois ci-dessus décrites est simple.

En effet, chaque bit de fi (AP) est obtenue par le OU EXCLUSIF d'au plus 4 bits de la décomposition binaire de l'adresse principale AP.

De plus, le matériel nécessaire pour implémenter les lois fi est le même quelque soit la loi : il s'agit de calculer $H(x) \oplus H^{-1}(y) \oplus z$ où x, y, z sont des chaînes de n bits.

Un mécanisme pour implémenter cette loi conforme à l'invention est représenté sur la figure 6.

Pour calculer $H(x) \oplus H^{-1}(y) \oplus z$ où x, y, z sont des chaînes de 6 bits individualisés en x6 à x1 ; y6 à y1 et z6 à z1, 6 portes XOR individualisées en P1 à P6 sont utilisées.

Chaque porte P est à 3 ou 4 entrées recevant chacune l'un des bits des chaînes x, y ou z et une sortie délivrant un bit t.

Comme représenté sur la figure 6, une entrée de la porte P1 et une entrée de la porte P2 reçoivent par exemple le bit x6.

L'implantation des entrées des portes XOR représentée sur la figure 6 est un exemple de réalisation de l'invention.

Bien entendu, d'autres implantations conformes à l'invention permettent de vérifier les propriétés des lois mentionnées ci-avant.

Le Demandeur a constaté que pour des tailles d'antémémoire égales, le comportement d'une antémémoire à deux bancs agencée selon l'invention présente un taux de succès nettement supérieur à celui d'une antémémoire associative par ensemble à deux bancs, et à peu près comparable à celui d'une antémémoire associative par ensemble à quatre bancs. Le comportement d'une antémémoire à quatre bancs agencée suivant l'invention présente un taux de succès supérieur à celui d'une antémémoire associative par ensemble à quatre bancs, et à peu près comparable à celui d'une antémémoire associative par ensemble à huit bancs.

**ANNEXE**

$$\underline{\text{formule I}} \qquad H : \{0,...,2^n-1\} \Rightarrow \{0,...,2^n-1\}$$

$$\{y_n,y_{n-1},...,y_1\} \Rightarrow y_n \oplus \{y_1,y_n,y_{n-1},...,y_3,y_2\}$$

où $\oplus$ est l'opération OU EXCLUSIF (XOR).

$$\underline{\text{Formule II}} \qquad f_1 : S \Rightarrow \{0, ..., 2^n-1\}$$

$$(A_3,A_2,A_1,A_0) \Rightarrow H(A_1) \oplus H^{-1}(A_2) \oplus A_2$$

$$\underline{\text{Formule III}} \qquad f_2 : S \Rightarrow \{0,...,2^n-1\}$$

$$(A_3,A_2,A_1,A_0) \Rightarrow H(A_1) \oplus H^{-1}(A_2) \oplus A_1$$

$$\underline{\text{Formule IV}} \qquad f_3 : S \Rightarrow \{0_1,...,2^n-1\}$$

$$(A_3,A_2,A_1,A_0) \Rightarrow H^{-1}(A_1) \oplus H(A_2) \oplus A_2$$

$$\underline{\text{Formule V}} \qquad f_4 : S \Rightarrow \{0,...,2^n-1\}$$

$$(A_3,A_2,A_1,A_0) \Rightarrow H^{-1}(A_1) \oplus H(A_2) \oplus A_1.$$

## Revendications

1. Dispositif d'antémémoire (AM), comprenant :

   - au moins une entrée/sortie-requête (ESRQ) pour recevoir une requête (REQ) d'accès à une donnée stockée en mémoire principale adressable (MP), ladite requête (REQ) comprenant une adresse principale de ladite donnée désirée (AP) et éventuellement des données (D) ;

   - au moins une entrée/sortie-mémoire principale (ESMP) reliée à la mémoire principale adressable (MP) pour accéder à ladite donnée désirée de la mémoire principale ;

   - une pluralité de X bancs de mémoire (BCi) avec i inférieur ou égal à X et supérieur à 0, ayant chacun un nombre Li lignes aptes à contenir des données, ces lignes étant individuellement désignables par une adresse locale (ALi), dans chaque banc (BCi) ;

   - des moyens de calcul (CAL) reliés à l'entrée/sortie-requête (ESRQ) et propres à répondre à la requête (REQ) en reliant l'adresse en mémoire principale (AP) que contient cette requête à une adresse locale (AL) interne à chacun des bancs (BCi), la ligne ainsi désignée dans le banc (BCi) étant la seule ligne dudit banc susceptible de contenir la donnée référencée par l'adresse en mémoire principale ; et

   - des moyens de chargement (CHA) reliés à l'entrée/sortie-mémoire principale (ESMP) pour charger dans l'antémémoire la ligne de donnée de la mémoire principale contenant la donnée désirée lorsque celle-ci n'est pas présente dans l'antémémoire,

   caractérisé en ce que les moyens de calcul établissent ladite relation entre l'adresse en mémoire principale (AP) et l'adresse locale (ALi) dans le banc (BCi) selon une loi prédéterminée (fi) associée audit banc (BCi), en ce qu'au moins deux des lois prédéterminés (fi) sont distinctes suivant les bancs considérés, et en ce que les deux bancs considérés sont adressés séparément selon leur loi respective.

2. Dispositif selon la revendication 1, caractérisé en ce que les lois prédéterminées suivant les bancs considérés sont toutes distinctes.

3. Dispositif selon l'une quelconque des revendications précédentes, caractérisé en ce que les lois prédéterminées sont des lois équitables.

**4.** Dispositif selon l'une quelconque des revendications 1 à 3, caractérisé en ce que les lois prédéterminées sont des lois dispersives.

**5.** Dispositif selon l'une quelconque des précédentes revendications, caractérisé en ce que les lois prédéterminés sont des lois qui ne présentent pas de localité spatiale.

**Patentansprüche**

**1.** Cachespeichervorrichtung (AM), die folgendes aufweist:

- wenigstens einen Anforderungseingang/-ausgang (ESRQ) zum Empfang einer Zugriffsanforderung (REQ) für ein im adressierbaren Hauptspeicher (MP) gespeichertes Datenwort, wobei die Anforderung (REQ) eine Hauptadresse des gewünschten Datenworts (AP) sowie gegebenenfalls Daten (D) aufweist;

- wenigstens einen Haupteingabe-/ausgabespeicher (ESMP), der mit dem adressierbaren Hauptspeicher (MP) zum Zugriff auf das gewünschte Datenwort des Hauptspeichers verbunden ist;

- eine Vielzahl von X Speicherbanken (BCi) mit i kleiner gleich X und größer als 0, die jeweils eine Anzahl Li von Zeilen aufweisen, die zum Aufbewahren von Daten geeignet sind, wobei diese Zeilen individuell durch eine lokale Adresse (ALi) in jeder Bank (BCi) zu bezeichnen sind;

- Recheneinrichtungen (CAL), die mit dem Anforderungseingang/-ausgang (ESRQ) verbunden und dazu geeignet sind, auf die Anforderung (REQ) zu antworten, indem die Adresse im Hauptspeicher (AP), die diese Anforderung enthält, mit einer lokalen Adresse (AL) im Inneren jeder der Banken (BCi) verbunden wird, wobei die derart in der Bank (BCi) bezeichnete Zeile die einzige Zeile der Bank ist, die das durch die Adresse im Hauptspeicher angegebene Datenwort enthalten kann; sowie

- Ladeeinrichtungen (CHA), die mit dem Haupteingabe-/ausgabespeicher (ESMP) verbunden sind, um die Datenzeile des Hauptspeichers, die das gewünschte Datenwort enthält, in den Cachespeicher zu laden, wenn es nicht im Cachespeicher vorliegt,

dadurch gekennzeichnet, daß
die Recheneinrichtungen die Beziehung zwischen der Adresse im Hauptspeicher (AP) und der lokalen Adresse (ALi) in der Bank (BCi) nach einem der Bank (BCi) zugeordneten, vorbestimmten Gesetz (fi) herstellen, daß wenigstens zwei der vorbestimmten Gesetze (fi) nach den betrachteten Banken unterschiedlich sind, und daß die beiden betrachteten Banken nach ihrem jeweiligen Gesetz getrennt adressiert werden.

**2.** Vorrichtung nach Anspruch 1,
dadurch gekennzeichnet, daß
die nach den betrachteten Banken vorbestimmten Gesetze alle unterschiedlich sind.

**3.** Vorrichtung nach einem der vorhergehenden Ansprüche,
dadurch gekennzeichnet, daß
die vorbestimmten Gesetze gerechte Gesetze sind.

**4.** Vorrichtung nach einem der vorhergehenden Ansprüche,
dadurch gekennzeichnet, daß
die vorbestimmten Gesetze dispersive Gesetze sind.

**5.** Vorrichtung nach einem der vorhergehenden Ansprüche,
dadurch gekennzeichnet, daß
die vorbestimmten Gesetze Gesetze sind, die keinen räumlichen Ort darstellen.

**Claims**

1. A cache device (AM), comprising

   - at least one request input/output (ESRQ) for receiving a request (REQ) for access to a data item stored in the main addressable memory (MP), the said request (REQ) comprising a main address of the said data item (AP) and, optionally, data (D);

   - at least one main memory input/output (ESMP) connected to the main addressable memory (MP) for gaining access to the said desired data item of the main memory;

   - a plurality of X memory banks (BCi), with i less than or equal to X and greater than 0, each having a number Li of lines capable of containing data, these lines being capable of being individually designated by a local address (ALi) in each bank (BCi);

   - computing means (CAL) connected to the request input/output (ESRQ) and being capable of responding to the request (REQ) by connecting the address in the main memory (AP) contained in this address to a local address (AL) inside each of the banks (BCi), the line thus designated in the bank (BCi) being the only line of the said bank capable of containing the data item referenced by the address in the main memory; and

   - loading means (CHA) connected to the main memory input/output (ESMP), for loading into the cache memory the data line of the main memory containing the desired data item when the latter is not present in the cache memory;

   characterized in that the computing means establish the said relation between the address in the main memory (AP) and the local address (ALi) in the bank (BCi) according to a predetermined formula (fi) associated with the said bank (BCi),
   in that at least two of the predetermined formulas (fi) are distinctive according to the banks in question, and
   in that the two banks in question are addressed separately according to their respective formula.

2. A device according to claim 1, characterized in that the formulas. predetermined according to the banks in question, are all distinct.

3. A device according to any one of the preceding claims, characterized in that the predetermined formulas are equitable formulas.

4. A device according to any one of the preceding claims, characterized in that the predetermined formulas are dispersive formulas.

5. A device according to any one of the preceding claims, characterized in that the predetermined formulas are formulas which do not have any spatial locality.

PRO

REQ (AP, D)

SI

ESRQ

AM

LØ
L1

CAL

| MØ | M1 | M2 | M3 | M4 | M5 | M6 | M7 |
|----|----|----|----|----|----|----|----|

CHA        AP

| D | | | | | | | T |

D

LL

ESMP

MP

FIG.1

FIG. 2

FIG. 3

FIG.4

FIG.5

FIG. 6